# FASCICULE DE BREVET EUROPEEN

(11) **EP 2 494 152 B1**
(45) Date de publication et mention de la délivrance du brevet: **20.02.2019**
(21) Numéro de dépôt: 10785110.7
(22) Date de dépôt: 13.10.2010
(51) Int. Cl.: F01D 5/06, F16D 1/076, F04D 29/044, F01D 5/02, F01D 11/00

(54) **COUPLAGES ET LIGNE DE ROTORS DE TURBOMACHINE ASSOCIÉE**
KUPPLUNGEN UND ZUGEHÖRIGER ROTORSTRANG EINER STRÖMUNGSMASCHINE
COUPLINGS AND CORRESPONDING TURBOMACHINE ROTOR ASSEMBLY

(30) Priorité: 30.10.2009 FR 0957653
(43) Date de publication de la demande: 05.09.2012
(73) Titulaire: Safran Helicopter Engines, 64510 Bordes (FR)
(72) Inventeur: LE BRUSQ, Pascal, Pierre, F-64320 Idron (FR); OUSTY, Jean-Philippe, F-64420 Soumoulou (FR); SCUILLER, Lionel, F-64140 Billere (FR)
(74) Mandataire: Gevers & Orès
(86) Numéro de dépôt international: PCT/FR2010/052170
(87) Numéro de publication internationale: WO 2011/051592

(56) Documents cités:
- EP-A1- 0 479 632
- EP-A1- 1 577 495
- EP-A1- 1 577 495
- EP-A2- 1 193 370
- DE-C1- 19 518 678
- DE-C1- 19 518 678
- FR-A1- 2 734 618
- US-A- 5 628 621
- US-B2- 6 672 966

## Description

### DOMAINE TECHNIQUE

L'invention concerne un couplage entre pièces motrices de turbomachines - tels que des rouets de compresseurs centrifuges, des compresseurs axiaux ou des roues de turbine - dans un environnement non sécurisé. L'environnement d'un appareil est dénommé « non sécurisé » s'il est apte à créer, dans des conditions anormales de fonctionnement de l'appareil (aussi appelées cas de panne), des obstructions dudit passage et/ou à endommager des pièces motrices par déplacement ou détachement d'éléments, en particulier d'éléments de protection solidarisés aux parties annulaires de pièces en général par frettage.

La présente invention vise également le couplage apte à mettre en oeuvre ce procédé, ainsi que les arbres ou lignes rotors de transmission de turbomachine équipés de tels couplages.

L'invention se rapporte aux mécanismes de couplage denté pour l'assemblage de pièces motrices en rotation dans les moteurs, tels que des compresseurs centrifuges, des roues de turbine ou des couplages dans les lignes rotors ou transmissions dans les turbomachines. Ces pièces subissent de fortes contraintes tout en assurant une circulation d'air nécessaire aux flux d'air secondaires.

Ce type de couplage est également connu sous la dénomination anglo-saxonne de « curvic coupling », qui peut se traduire par « couplage à engrenage droit ».

### ETAT DE LA TECHNIQUE

De tels couplages non soumis au passage de flux d'air sont largement connus de documents de l'état de la technique, comme par exemple du document DE 195 18 678 C1. Plus particulièrement, dans le domaine des turbomachines, de tels couplages entre rouets et/ou entre roues de compresseur et/ou entre roues de turbine sont connus par exemple des documents de brevet US 5 628 621 ou US 6 672 966 ou EP 1 577 495 A1. Dans ces documents, les couplages curvic ne sont pas explicitement exposés à un environnement susceptible de contenir des éléments aptes à se détacher ou à se déplacer pour obstruer le passage d'air entre les couronnes dentées. De plus aucun moyen n'est prévu pour protéger un passage d'air dans les engrenages. Au contraire, le document US 5 628 621 prévoit l'introduction d'un joint d'étanchéité dans un logement annulaire ménagé sur les couronnes EP 1 577 495 divulgue l'art antérieur le plus proche.

Or les rouets ou les roues de compresseurs ou les roues de turbines de turbomachines peuvent être équipés d'éléments annulaires de protection, par exemple de protection thermique, ou de jonction entre rotors et stators. Ces pièces de protection prennent la forme de fourreaux, de plaques ou de joints annulaires. Ces pièces sont en général frettées sur les faces des rotors (rouets ou roues) à protéger.

Ces éléments de protection internes de rouets ou de roues de turbine ou de compresseur sont, dans le cas de liaison par curvic coupling, prolongés par des languettes de protection des couplages particulièrement utiles en cas de défrettage. Ces languettes présentent une longueur axiale, une largeur annulaire et une distance radiale aux couplages et aux pièces motrices telles que le passage de l'air dans le couplage, par exemple du système d'air secondaire centripète, soit préservé sans refoulement ni perturbation.

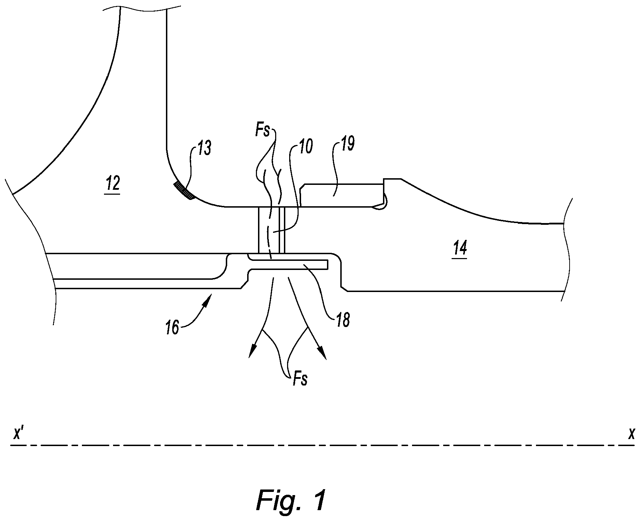

Dans des conditions anormales d'utilisation, des défrettages peuvent en effet se produire. De telles pièces de protection peuvent alors provoquer des blocages de la circulation d'air prévue au niveau des couplages. Comme illustré sur le schéma de principe de la figure 1 - représentant partiellement un couplage curvics 10 entre rouets 12 et 14 de compresseurs de turbomachine d'hélicoptère - le fourreau 16 muni de languettes 18 réparties sur sa circonférence et le joint labyrinthe 19 sont frettés respectivement sur les rouets 12 et 14. Les éléments représentés sont de révolution autour de l'axe central X'X.

En se défrettant, le fourreau 16 ou le joint 19 viennent obstruer la section de passage du flux d'air secondaire Fs, ce qui entraîne une dégradation voire une perte des fonctions assurées par ce flux d'air secondaire, par exemple pressurisation, refroidissement, étanchéité, etc.

De plus, les languettes 18 dépassent sensiblement de la face en regard du rouet 12, ce qui créé un problème de manipulation de l'ensemble du rouet 12 et de son fourreau 16, par exemple lors de la pose de cet ensemble en appui sur les languettes sur une surface plane de convoyage ou lors de l'accostage de cet ensemble sur le rouet 14 : les languettes peuvent alors être dégradées ou blesser des zones critiques par enfoncement du fourreau dans le rouet.

Par ailleurs, les fourreau et joint défrettés 16 et 19 viennent heurter et blesser respectivement les rouets 14 et 12. En particulier, le joint 19 vient en contact d'une zone 13 de courbure critique du rouet 12 pour sa durée de vie. Un départ de crique peut se former et une conséquence possible est l'éclatement de pièce après propagation de la crique.

### EXPOSÉ DE L'INVENTION

L'invention est définie dans les revendications adjointes.

### BREVE DESCRIPTION DES FIGURES

D'autres avantages et caractéristiques de l'invention pourront apparaître lors de la description détaillée qui suit, en référence aux figures annexées qui représentent, respectivement :
- la figure 1, une vue partielle schématique en coupe d'un couplage selon l'art antérieur de rouets de compresseurs dans une turbomachine (déjà commentée) ;
- les figures 2 et 2a, une vue en coupe partielle schématique et une vue agrandie d'un exemple de couplage de rouets selon l'invention ;
- la figure 3, une vue radiale détaillée, depuis l'extérieur de la pièce, de l'engrenage entre les dents des couronnes mettant en évidence les passages d'air;
- les figures 4 et 4a, une vue externe en perspective du couplage entre deux rotors de turbomachine comportant un couplage selon la figure 2, et une vue partielle agrandie, mettant en évidence le positionnement entre un joint labyrinthe et la couronne dentée en extension en regard pouvant servir de butée à ce joint, et
- les figures 5a à 5c, trois vues internes selon différentes orientations de l'arbre comportant un fourreau de rouet et la couronne dentée en extension en regard pouvant servir de butée à ce fourreau.

### DESCRIPTION DETAILLEE

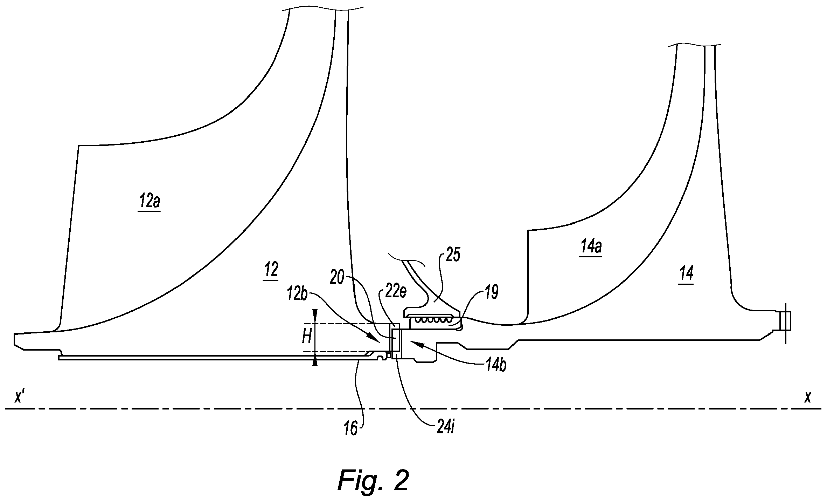

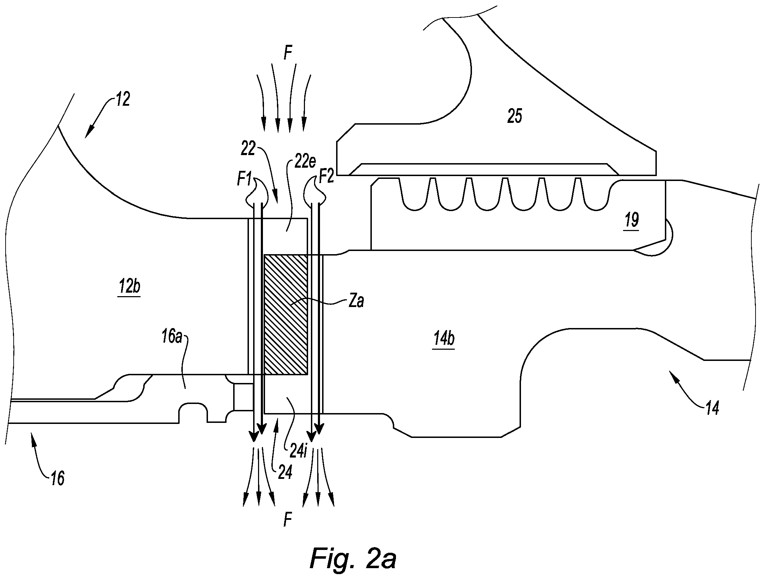

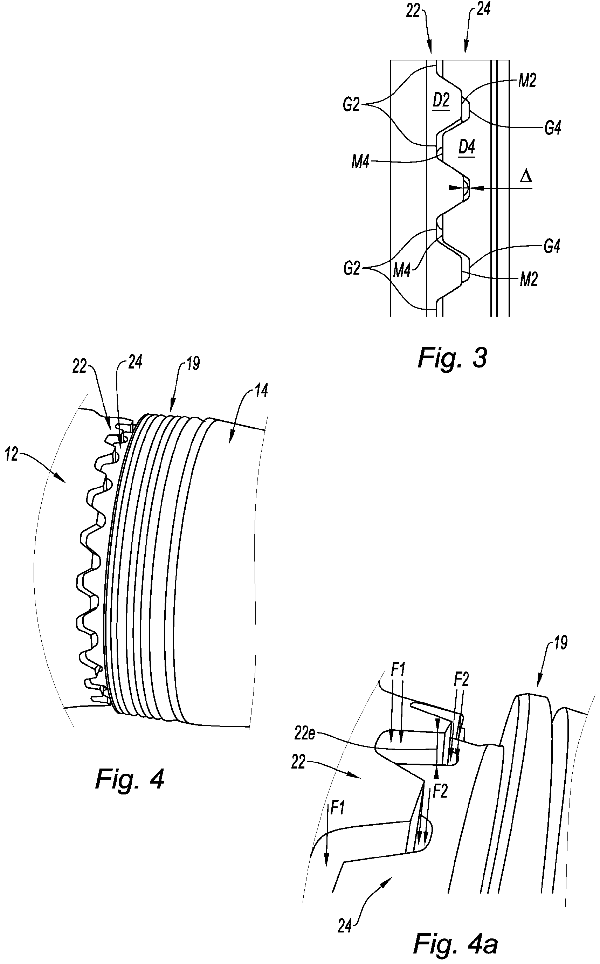

En référence à la vue en coupe schématique de la figure 2, ainsi que sur la vue agrandie correspondante de la figure 2a, les éléments repris ou correspondants à ceux de la figure 1 apparaissent avec les mêmes signes de référence. Les rouets 12 et 14 sont pourvus d'ailettes 12a et 14a, encore appelées pales ou aubages, et sont engrenés l'un à l'autre par un couplage 20 selon l'invention comportant deux couronnes dentées 22, 24. Ces couronnes présentent respectivement une extension externe 22e et une extension interne 24i au regard de l'axe central X'X. Ce couplage sera décrit plus précisément en référence à la figure 3.

Par ailleurs, le fourreau 16 est fretté sur une portion de la paroi cylindrique interne du rouet 12 ainsi que sur le col 12b du rouet qui forme la couronne dentée 22 à son extrémité. L'extension interne 24i de l'autre couronne dentée 24 formée en extrémité du col 14b du rouet 14, forme une butée axiale au fourreau 16 lorsque ce fourreau se défrette.

D'une façon similaire, le joint labyrinthe 19 -fretté sur la paroi externe du col 14b pour réaliser l'étanchéité avec le stator 25- vient en butée sur l'extension externe 22e de la couronne du rouet 12 en cas de défrettage du joint 19.

Globalement, les cols cylindriques en regard de 12b et de 14b, sur lesquels sont formées les couronnes dentées 22 et 24, présentent une épaisseur radiale sensiblement identique mais une réduction des diamètres extrêmes, tant internes qu'externes, pour un rouet 14 par rapport à l'autre rouet 12. Les dents des couronnes 22, 24 viennent s'engrener en appui sur une hauteur commune H suffisante pour réaliser un engrenage suffisamment fiable, compte tenu des contraintes technologiques et des conditions de fonctionnement. Le couplage 20 entre les couronnes 22, 24 se traduit alors par une réduction radiale correspondante des couronnes 22, 24, de sorte que le pourtour externe de la couronne 22 du rouet 12 soit en extension radiale 22e par rapport à la couronne 24 du rouet 14, et que le pourtour interne de l'autre couronne 24 soit en extension radiale interne 24i par rapport à la première.

La figure 2a présente en particulier la zone d'appui hachurée Za entre les dents des couronnes 22 et 24 ainsi que le flux d'air secondaire F de passage entre les flèches F1 et entre les flèches F2 sur cette figure. Ce flux F, centripète dans l'exemple illustré, passe hors des zones d'appui Za. Plus précisément comme il apparaît sur la vue supérieure de la figure 3, le flux F passe entre, d'une part, les fonds de gorge G2 et G4 des parties femelles des dents D2 et D4 des couronnes dentées 22 ou 24 et, d'autre part, les extrémités M4 et M2 des parties mâles des dents en regard de l'autre couronne, respectivement 24 ou 22. La distance entre les fonds de gorge et les extrémités de dents en regard est dénommé ci-après Δ, correspondant à la section de passage des flux F1 et F2. Cette vue supérieure présente également une portion d'extrémité du joint labyrinthe 19.

Sur la vue frontale externe et la vue agrandie respectivement des figures 4 et 4a, apparaissent le positionnement du joint labyrinthe 19 fretté, sur le col du rouet 14 qui se termine par la couronne 24, en regard de la couronne dentée 22 du rouet 12 en extension. La couronne 22 peut servir de butée au joint 19 lorsqu'un défrettage se produit. Le joint labyrinthe 19 ne peut alors obstruer que la partie F2 du flux d'air car il est bloqué par l'extension 22e de la couronne 22. L'autre partie F1 du flux n'est pas perturbée.

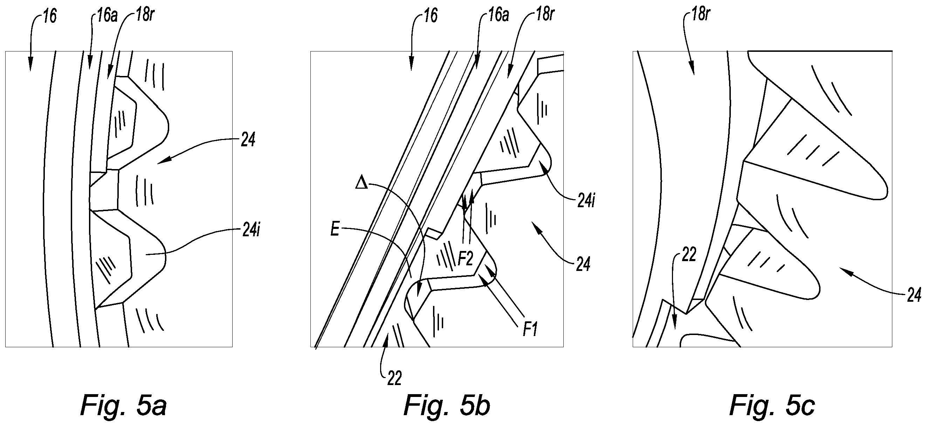

Pour éviter d'obstruer partiellement le flux d'air, le joint 19 pourrait présenter des languettes annulaires réparties sur son pourtour. Une telle solution est adoptée sur le fourreau 16. En référence à la figure 2a et, de manière plus détaillée, aux représentations internes agrandies des figures 5a à 5c selon différents angles de vue, des languettes résiduelles 18r se projettent à partir du bourrelet de fixation 16a en extrémité du fourreau 16.

Les languettes 18 de l'état de la technique (cf. figure 1) ont ainsi été sectionnées de sorte que leur longueur restante soit au moins égale à la distance axiale Δ correspondant à la section du flux F1 (cf. figure 3). Ainsi, lors d'un défrettage, le flux d'air n'est sensiblement pas perturbé : les espaces E entre les languettes 18r laissent passer la partie F2 du flux et la partie F1 du flux est préservée par l'extension interne 24i de la couronne 24. Sur les figures 5a à 5c, la discontinuité des languettes résiduelles 18r fournit l'espace E créé entre une languette 18r, la languette suivante (non représentée) et l'extrémité du fourreau 16.

L'invention n'est pas limitée à l'exemple de réalisation décrit et représenté. Il est par exemple possible de prévoir des parties mâles de dents de couronnes présentant des avancées axiales de butée sur leurs extrémités externes ou internes, de façon à empêcher tout blocage du flux d'air passant entre ces parties mâles et les parties femelles de l'autre couronne.

II est également possible de prévoir d'autres formes de dents, des extensions radiales externe et interne du couplage d'amplitude différente, des distances de fonds de gorge différentes pour laisser passer des flux d'air de sections différentes, ou la présence d'une seule extension, externe ou interne. Selon la configuration, le couplage peut être de portée limitée ou ne pas être de révolution, par exemple en appui plan.

Selon d'autres exemple, les couronnes présentent des dents de configuration différente, tant dans leur forme que par leur profondeur axiale ou radiale.

## Revendications

1. Couplage (20), comportant un passage d'air protégé, entre rouets (12, 14) de turbomachine munis d'ailettes (12a, 14a), lesdits rouets (12, 14) comportant des éléments enveloppé (16) et/ou enveloppant (19) frettés sur lesdits rouets (12, 14), ledit couplage (20) entraînant les rouets (12, 14) en rotation autour d'un axe central (X'X) par engrenage mutuel d'extrémités (22, 24) des rouets (12, 14), tout en laissant passer de l'air (F, F1, F2) entre lesdites extrémités (22, 24), ledit couplage (20) étant **caractérisé en ce qu'**une extrémité (22, 24) dudit couplage (20) est prolongée radialement au moins partiellement par rapport à l'autre extrémité (24, 22) dudit couplage (20), de sorte que ladite extrémité (22, 24) du rouet (12, 14) présente au moins une extension externe (22e) ou interne (24i) respectivement en regard axial de l'élément enveloppant (19) ou enveloppé (16) fretté sur l'autre rouet (14, 12) associé à l'autre extrémité (24, 22), pour que ladite extension externe (22e) ou interne (24i) forme butée à l'encontre dudit élément enveloppant (19) ou enveloppé (16) en cas de défrettage axial dudit élément enveloppant (19) ou enveloppé (16) du rouet (12, 14).

2. Couplage (20) selon la revendication 1, **caractérisé en ce qu'**il comporte au moins une extension radiale externe (22e) et au moins une extension radiale interne (24i).

3. Couplage (20) selon la revendication précédente, **caractérisé en ce qu'**il comporte une seule extension externe et une seule extension interne, les extensions étant de révolution au moins partielle autour de l'axe central (X'X).

4. Couplage (20) à engrenage droit entre rouets (12, 14) d'une turbomachine munis d'ailettes (12a, 14a) selon l'une quelconque des revendications 1 à 3, comportant deux couronnes (22, 24) de dents (D2, D4), chaque couronne étant à l'extrémité d'un rouet (12, 14) et engrenée dans l'autre couronne pour lui communiquer un entraînement en rotation autour d'un axe central (X'X) tout en laissant passer de l'air (F2, F4) entre les gorges (G2, G4) de portions femelles et les extrémités (M2, M4) de portions mâles des dents (D2, D4) desdites couronnes, **caractérisé en ce que** au moins une couronne (22, 24) est prolongée au moins partiellement radialement par rapport à l'autre couronne, de sorte à présenter au moins une extension externe (22e) ou une extension interne (24i) de couronne en regard axial de l'élément enveloppant (19) ou enveloppé (16) fretté sur ledit rouet (12, 14) associé à l'autre couronne (24, 22), pour que ladite extension externe (22e) ou interne (24i) forme butée à l'encontre dudit élément enveloppant (19) ou enveloppé (16) en cas de défrettage de dudit élément enveloppant (19) ou enveloppé (16) du rouet (12, 14).

5. Couplage à engrenage droit selon la revendication précédente, dans lequel chaque couronne présente au moins une extension (22e, 24i), les extensions étant externe(s) et interne(s).

6. Couplage à engrenage droit selon la revendication précédente, dans lequel une couronne (22) présente une seule extension externe de révolution (22e) et l'autre couronne présente une seule extension interne de révolution (24i).

7. Couplage à engrenage droit selon l'une quelconque des revendications 4 à 6, dans lequel la couronne dentée en extension d'une pièce motrice est solidarisée à un fourreau de protection (16) qui présente des languettes axiales (18r) de longueur sensiblement égale ou supérieure à la profondeur axiale (Δ) de passage d'air au niveau des gorges (G2, G4) entre parties mâles et femelles des dents.

8. Couplage à engrenage droit selon l'une des revendications 4 ou 5, dans lequel les extensions sont de portée localisée, en appui plan ou de révolution autour de l'axe central.

9. Ligne de rotors de turbomachine comportant des turbines de transformation d'énergie à partir de combustion et des compresseurs d'air destiné à la combustion, **caractérisée en ce qu'**elle comporte un nombre approprié de couplages (20) selon l'une quelconque des revendications 4 à 8 entre deux rotors de compresseurs et de turbines de la turbomachine munis de rouets (12, 14) munis d'ailettes (12a, 14a).

## Patentansprüche

1. Kupplung (20), umfassend einen geschützten Luftdurchgang zwischen mit Schaufeln (12a, 14a) versehenen Turbomaschinen-Laufrädern (12, 14), wobei die Laufräder (12, 14) auf den Laufrädern (12, 14) aufgeschrumpfte umhüllte (16) und/oder umhüllende (19) Elemente umfassen, wobei die Kupplung (20) die Laufräder (12, 14) durch Drehen um eine Mittelachse (X'X) durch gegenseitiges Eingreifen von Enden (22, 24) der Laufräder (12, 14) antreibt, während Luft (F, F1, F2) zwischen den Enden (22, 24) durchgelassen wird, wobei die Kupplung (20) **dadurch gekennzeichnet ist, dass** ein Ende (22, 24) der Kupplung (20) mindestens teilweise bezüglich des anderen Endes (24, 22) der Kupplung (20) radial verlängert ist, sodass das Ende (22, 24) des Laufrads (12, 14) aus axialer Sicht des auf das andere Laufrad (14, 12) aufgeschrumpften umhüllenden (19) oder umhüllten (16) Elements, das mit dem anderen Ende (24, 22) in Verbindung steht, jeweils mindestens eine externe (22e) oder interne (24i) Verlängerung aufweist, damit die externe (22e) oder interne (24i) Verlängerung im Fall von axialer Entmantelung des umhüllenden (19) oder umhüllten (16) Elements des Laufrads (12, 14) gegen das umhüllende (19) oder umhüllte (16) Element ein Anschlagselement bildet.

2. Kupplung (20) nach Anspruch 1, **dadurch gekennzeichnet, dass** sie mindestens eine externe (22e) radiale Verlängerung und mindestens eine interne (24i) radiale Verlängerung umfasst.

3. Kupplung (20) nach dem vorstehenden Anspruch, **dadurch gekennzeichnet, dass** sie eine einzelne externe Verlängerung und eine einzelne interne Verlängerung umfasst, wobei die Verlängerungen mindestens teilweise um die Mittelachse (X'X) gedreht sind.

4. Kupplung (20) mit Stirnradgetriebe zwischen Laufrädern (12, 14) einer mit Schaufeln (12a, 14a) versehenen Turbomaschine nach einem der Ansprüche 1 bis 3, umfassend zwei Kränze (22, 24) mit Zähnen (D2, D4), wobei jeder Kranz ein Ende eines Laufrads (12, 14) ist und in den anderen Kranz eingreift, um ihm einen Drehantrieb um eine Mittelachse (X'X) zu vermitteln, während Luft (F2, F4) zwischen den Vertiefungen (G2, G4) der weiblichen Abschnitte und den Enden (M2, M4) der männlichen Abschnitte der Zähne (D2, D4) der Kränze durchgelassen wird, **dadurch gekennzeichnet, dass** mindestens ein Kranz (22, 24) mindestens teilweise bezüglich des anderen Kranzes radial verlängert ist, um mindestens eine externe (22e) Verlängerung oder eine interne (24i) Verlängerung des Kranzes, aus axialer Sicht des auf das andere Laufrad (12, 14) aufgeschrumpften umhüllenden (19) oder umhüllten (16) Elements, das mit dem anderen Kranz (24, 22) in Verbindung steht, aufzuweisen, damit die externe (22e) oder interne (24i) Verlängerung im Fall von Entmantelung des umhüllenden (19) oder umhüllten (16) Elements des Laufrads (12, 14) gegen das umhüllende (19) oder umhüllte (16) Element ein Anschlagselement bildet.

5. Kupplung mit Stirnradgetriebe nach dem vorstehenden Anspruch, wobei jeder Kranz mindestens eine Verlängerung (22e, 24i) aufweist, wobei die Verlängerung(en) extern und intern ist (sind).

6. Kupplung mit Stirnradgetriebe nach dem vorstehenden Anspruch, wobei ein Kranz (22) eine einzelne externe Drehverlängerung (22e) aufweist und der andere Kranz eine einzelne interne Drehverlängerung (24i) aufweist.

7. Kupplung mit Stirnradgetriebe nach einem der Ansprüche 4 bis 6, wobei der gezahnte Kranz in Verlängerung eines Motorteils mit einem Schutzmantel (16) fest verbunden ist, der axiale Rastzungen (18r) von im Wesentlichen gleicher oder größerer Länge als die axiale Tiefe (Δ) des Luftdurchgangs auf Höhe der Vertiefungen (G2, G4) zwischen männlichen und weiblichen Teilen der Zähne aufweist.

8. Kupplung mit Stirnradgetriebe nach einem der Ansprüche 4 oder 5, wobei die Verlängerungen, auf ebener Unterlage oder um die Mittelachse gedreht, von lokalisierter Reichweite sind.

9. Rotorstrang einer Turbomaschine, umfassend Umwandlungsturbinen von aus Verbrennung ausgehender Energie und für die Verbrennung bestimmte Luftverdichter, **dadurch gekennzeichnet, dass** er eine angemessene Anzahl an Kupplungen (20) nach einem der Ansprüche 4 bis 8 zwischen zwei Verdichter- und Turbinenrotoren der mit Turbine aufweist, die mit Laufrädern (12, 14) versehen ist, welche mit Schaufeln (12a, 14a) versehen sind

## Claims

1. Coupling (20), comprising a protected passage of air, between turbomachine impellers (12, 14) provided with fins (12a, 14a), said impellers (12, 14) comprising enveloped (16) and/or enveloping (19) elements shrink-fitted on said impellers (12, 14), said coupling (20) driving the impellers (12,14) in rotation about a central axis (X'X) by mutual meshing of extremities (22, 24) of the impellers (12, 14), whilst allowing air (F, F1, F2) to pass between said extremities (22, 24), said coupling (20) being **characterised in that** an extremity (22, 24) of said coupling (20) is at least partially radially extended relative to the other extremity (24, 22) of said coupling (20), in such a way that said extremity (22, 24) of the impeller (12, 14) has at least one external (22e) or internal (24i) extension respectively axially facing the enveloping (19) or enveloped (16) element shrink-fitted on the other impeller (14, 12) associated with the other extremity (24, 22), so that said external (22e) or internal (24i) extension forms an abutment against said enveloping (19) or enveloped (16) element in case of axial shrink-fitting of said enveloping (19) or enveloped (16) element of the impeller (12, 14).

2. Coupling (20) according to claim 1, **characterised in that** it comprises at least one external radial extension (22e) and at least one internal radial extension (24i).

3. Coupling (20) according to the preceding claim, **characterised in that** it comprises a single external extension and a single internal extension, the extensions being of a at least partial revolution about the central axis (X'X).

4. Straight spur gear coupling (20) between impellers (12, 14) of a turbomachine provided with fins (12a, 14a) according to any one of claims 1 to 3, comprising two rings (22, 24) of teeth (D2, D4), each ring being at the extremity of an impeller (12, 14) and meshing with the other ring so as to transmit to it a driven rotation about a central axis (X'X) whilst allowing air (F2, F4) to pass between the grooves (G2, G4) of female portions and the extremities (M2, M4) of male portions of the teeth (D2, D4) of said rings, **characterised in that** at least one ring (22, 24) is extended at least partially radially relative to the other ring, in such a way as to have at least one external extension (22e) or one internal extension (24i) of a ring axially facing the enveloping (19) or enveloped (16) element shrink-fitted on said impeller (12, 14) associated with the other ring (24, 22), so that said external (22e) or internal (24i) extension forms an abutment against said enveloping (19) or enveloped (16) element in case the shrink-fit should come apart from said enveloping (19) or enveloped (16) element of the impeller (12, 14).

5. Straight spur gear coupling according to the preceding claim, wherein each ring has at least one extension (22e, 24i), the extensions being external and internal.

6. Straight spur gear coupling according to the preceding claim, wherein a ring (22) has a single external extension of revolution (22e) and the other ring has a single internal extension of revolution (24i).

7. Straight spur gear coupling according to any one of claims 4 to 6, wherein the toothed ring in extension of a drive part is rigidly fastened to a protective sheath (16) that features axial tongues (18r) the length of which is substantially equal to or greater than the axial depth (Δ) of the air passage at the level of the grooves (G2, G4) between male and female portions of the teeth.

8. Straight spur gear coupling according to one of claims 4 or 5, wherein the extensions are localised, in the form of plane bearing engagement or circular about the central axis.

9. Turbomachine rotor line comprising turbines for transformation of energy from combustion and air compressors intended for combustion, **characterised in that** it comprises an appropriate number of couplings (20) according to any one of claims 4 to 8 between two rotors of compressors and turbines of the turbomachine provided with impellers (12, 14) provided with fins (12a, 14a).
